# FASCICULE DE BREVET EUROPEEN

(11) **EP 3 901 000 B1**
(45) Date de publication et mention de la délivrance du brevet: **20.09.2023**
(21) Numéro de dépôt: 21165211.0
(22) Date de dépôt: 26.03.2021
(51) Int. Cl.: B62B 3/10, B62B 5/00, A63B 55/60, B62B 3/12, B62B 3/02, B62B 5/06

(54) **CHARIOT DE GOLF**
GOLFWAGEN
GOLF CART

(30) Priorité: 23.04.2020 CH 4762020
(43) Date de publication de la demande: 27.10.2021
(73) Titulaire: De Preux, Gisèle, 3960 Sierre (CH); De Preux, Etienne, 3960 Sierre (CH)
(72) Inventeur: De Preux, Gisèle, 3960 Sierre (CH); De Preux, Etienne, 3960 Sierre (CH)
(74) Mandataire: P&TS SA (AG, Ltd.)

(56) Documents cités:
- DE-A1- 10 229 270
- DE-U1-202010 005 102
- US-A1- 2011 241 314
- US-A1- 2013 026 738

## Description

### Domaine technique

La présente invention concerne un chariot pliable à trois roues pour transporter un objet ou contenant, comme un sac de golf.

### Etat de la technique

On connaît dans l'état de la technique des chariots à trois roues et une variété de ces conceptions ont été décrites en termes de structure et de mécanismes de pliage de ces chariots.

Pour le transport en toute sécurité d'articles volumineux ou lourds, un chariot doit respecter les critères de stabilité sur des terrains divers. En plus, il doit être facilement manoeuvrable.

Afin de bien correspondre aux exigences d'un grand nombre d'applications, γ compris le transport d'équipements sportifs tels que des sacs de golf, le chariot doit être ergonomique et facile à manipuler. En particulier, le mécanisme de pliage d'un chariot de sport doit être simple et ne doit pas reposer sur plusieurs étapes d'exécution, comme par exemple un dévissage ou un détachement de certains éléments.

Le chariot doit être suffisamment léger pour être soulevé par son utilisateur. Le volume et la forme du chariot plié doivent convenir à des espaces de transport et de stockage disponibles, tel que, par exemple, un coffre de voiture ou une armoire de rangement.

Dans l'état de la technique on trouve plusieurs documents proposant des chariots pliables à trois roues, qui peuvent être manoeuvrés à la main ou entraînés par un moteur.

Parmi cette liste, le document WO 2019197421 A3 divulgue un chariot de golf destiné à porter un sac de golf, possédant deux roues avant et une roue arrière. L'ensemble du chariot ne permet pas un pliage et un dépliage en une seule opération.

Le document US 2013075989 A1 divulgue une structure à roues présentant une capacité de conversion entre trois roues dans un seul plan destiné à la manipulation ou à la pose de panneaux ou plaques. La largeur du chariot dans sa position pliée est définie par les roues avant et n'est pas réduite dans la position pliée par rapport à la position dépliée.

Le document US 2004238241 A1 décrit un chariot de golf à moteur composé de deux roues avant, et d'une roue arrière. La largeur du chariot dans sa position pliée est définie par les roues avant et n'est pas réduite dans la position pliée par rapport à la position dépliée. Afin d'atteindre sa taille de stockage compacte, le chariot doit être démonté en plusieurs étapes.

Le document US 2007024030 A1 présente un mécanisme d'équilibrage pour un chariot de golf pliable à deux roues. Le chariot est maintenu dans un état équilibré lorsque le centre de gravité est en ligne avec la ligne médiane des roues du chariot.

Le document US 2013026738 A1 décrit un chariot de golf comprenant un support de roue arrière fixée à un cadre supérieur par une plaque de connexion et une roue avant à l'extrémité inférieure d'un cadre inférieur, qui est relié au cadre supérieur.

Le document US20110241314 A1 décrit un chariot de golf comprenant un support de chariot supérieur, un support de chariot inférieur et un ensemble de tringlerie. Ces éléments sont reliés de telle sorte qu'il est possible de déplier ou de plier simultanément le support de chariot supérieur, le support de chariot inférieur, la roue avant et les roues arrière.

Plusieurs autres documents GB 1307108 A**,** US 3850441 A1**,** GB 1379527 A**,** NL 2008194 C présentent des structures possédant deux roues avant et une roue arrière, cependant ces chariots ne peuvent pas être pliés de manière facile, de plus un système de blocage doit être activé avant le pliage.

Les chariots de transport décrits dans l'état de la technique répondent à des degrés divers aux exigences de stabilité, d'agilité et de facilité de manoeuvre, d'ergonomie et de simplicité de démontage dans une position adaptée au transport et au stockage du chariot. Toutefois, aucune des solutions actuelles ne combine efficacement ces caractéristiques souhaitables. En particulier, le démontage du chariot ou sa transformation en une forme transportable et stockable peu volumineuse sont souvent laborieux.

### Bref résumé de l'invention

Un but de la présente invention est de proposer un chariot de sport, en particulier de golf, qui corresponds mieux à l'ensemble des caractéristiques souhaitables susmentionnées.

Il est un autre but de la présente invention de prévoir un mécanisme simple de pliage d'un chariot dans une forme facilement transportable et rangeable sans qu'il soit nécessaire de démonter les éléments individuels.

Selon l'invention, ces buts sont atteints notamment au moyen d'un chariot de transport pliable comprenant les caractéristiques de la revendication 1.

Cette solution présente notamment l'avantage par rapport à l'art antérieur qu'elle permet une ouverture et fermeture simple, qui peut être effectuée manuellement et en une seule opération.

Idéalement, le chariot comprend également un élément de support adapté, de préférence pliable, pour recevoir un objet ou contenant, comme un sac de golf.

En plus, le chariot est de préférence équipé d'un élément de préhension adapté pour manoeuvrer manuellement le chariot. Optionnellement le chariot peut être motorisé en utilisant de préférence un système de traction. Un tel système fournit l'avantage d'une plus grande stabilité du chariot motorisé par rapport à un chariot entraîné par propulsion arrière. En outre, en option, le chariot motorisé peut être commandé à distance, en utilisant par exemple un système de télécommande.

Avantageusement, l'ouverture et la fermeture du chariot sont résultent du mouvement de translation du tube central par rapport à la cage. Ce mouvement est transmis aux tubes des roue par un système de bielle, comprenant deux bielles avant et une bielle arrière, qui constituent une connexion entre les tubes de roues et le tube principal. Une extrémité de chaque bielle est connectée de manière pivotant au tube principal et l'autre extrémité de chaque bielle est reliée de manière pivotant à un tube de roue. Le système de bielles fournit le lien entre le mouvement de translation réversible du tube principal par rapport à la cage et les mouvements de pivotement des trois tubes de roues par rapport au tube principal, de sorte que ces mouvements soient toujours effectués conjointement.

Les bielles de roues avant sont connectées au tube central au moyen d'un élément de fixation. L' élément de fixation est localisé dans une première portion du tube principale. Cette première portion est plus proche des roues avant qu'une deuxième portion du tube principal, à laquelle la bielle de la roue arrière est connectée au moyen d'un deuxième élément de fixation. Le chariot atteint sa position déployée au maximum, lorsque les deux bielles avant sont perpendiculaires au tube principal. L'extension maximum du chariot dans sa position déployée est donc limitée par la longueur des bielles avant.

Le poids de la charge, déposée sur le chariot à l'aide de l'élément de support, fixe le chariot dans sa position déployée, et ce notamment grâce au logement des trois bielles dans les deux éléments de fixation, qui sont distants entre eux selon une position écartée. Les éléments de fixation comprennent de préférence des fourches pour le logement des bielles. Il n'y a donc pas de besoin d'un mécanisme de blocage de la position déployée ou de la position pliée, comme il est connu des autres modèles de chariots pliables.

La distance entre le premier et le deuxième élément de fixation est suffisamment grande pour contribuer à la stabilité du chariot. Notamment elle est suffisamment importante pour empêcher un pliage spontané ou involontaire du chariot. De préférence la distance entre les deux éléments de fixations est comprise entre 100% et 20%, idéalement 50 % ± 2 %, de la longueur de la cage.

Une extrémité de chaque bielle pivotante suit le mouvement de translation du tube principal par rapport à la cage, de sorte que l'autre extrémité de chaque bielle provoque un mouvement simultané (de retour vers ou d'écartement) des trois tubes de roues par rapport à l'axe central. Les points de pivotement des trois tubes de roues sont localisés dans un empattement situé à l'extrémité de la cage la plus éloignée des roues avant. A cause de leur connexion avec le tube principal par le système de bielle, les trois des tubes de roues pivotent en direction du tube principal, dès que le tube principal effectue un mouvement de translation par rapport à la cage en s'éloignant des roues avant : c'est le passage de la position déployée à la position pliée. La synchronisation des mouvements fondée sur le système de bielles entraîne également le pivotement des tubes de roues vers l'extérieur, à l'écart du tube principal, lorsque le tube principal effectue un mouvement de translation par rapport à la cage en direction des roues avant : c'est le passage de la position pliée à la position déployée.

Avantageusement, le mouvement de translation du tube principal par rapport à la cage en direction opposé des roues avant peut être effectué en poussant manuellement le tube principal en direction de la cage. Cette opération simple entraîne également le pliage du chariot.

Typiquement, les dimensions d'un chariot de golf selon l'invention, adapté pour le transport des sacs de golfs sont comprises entre 800 mm et 1'000 mm de longueur, entre 800 mm et 1'000 mm de largeur, et 120 mm et 220 mm de hauteur dans la position pliée du chariot de golf.

Également simple et facile à opérer, l'ouverture du chariot est effectuée lorsqu'un au moins des tubes de roue est tiré vers l'extérieur, à l'écart du tube principal. Au moyen du système de bielles et des points de pivotement situés dans l'empattement, ce mouvement provoque un pivotement des autres tubes de roues vers l'extérieur et un mouvement de translation du tube principal en direction des roues avant.

Ce mécanisme de pliage simple n'exige aucun démontage de pièces particulières du chariot. Ce fait permet d'omettre des éléments supplémentaires qui sont requis pour la fixation et la libération des éléments à démonter. Sans ces éléments supplémentaires le chariot est plus simple d'utilisation, plus rapide à plier/déplier, ce qui est un avantage distinct pour la manutention du chariot.

L'arrangement décalé des roues par rapport à leur tube de roue, ramène la charge, par exemple le sac de golf, à l'intérieur d'un espace défini par la projection verticale en direction opposée de la force de gravité d'un triangle isocèle 200 formé par les centres des roues. En outre, il permet une augmentation de l'empattement, donc une stabilité plus grande au roulage du chariot. Plus précisément, ce décalage correspond à une orientation non parallèle du plan moyen des roues par rapport à leur tube de roue, ou orientation angulaire non nulle, idéalement 35 degrés. Également, ledit triangle isocèle 200 est défini par les centres des trois roues. Le centre de la roue arrière 320 est en position du sommet principal définissant un angle inférieur à 60 degrés dudit sommet principal du triangle 200.

Cet agencement évite que le centre de gravité de la charge se trouve en dehors dudit espace, ce qui risquerait de causer une bascule du chariot et de la charge. Le chariot et en particulier le chariot chargé, sont donc plus stables sur des terrains irréguliers ou sur des terrains bosselés. Dans tous les cas, cela ramène le poids du sac vers l'arrière, ce qui donne une plus grande stabilité à l'ensemble.

La roue arrière est retenue par un support de roue arrière, qui est relié au tube de roue arrière par une liaison pivot. Le support de roue arrière pivote autour de l'axe vertical de la liaison pivot, qui est un axe de rotation. Le support de roue arrière présente une orientation angulaire par rapport au tube de roue arrière non nulle, idéalement entre 70 degrés et 90 degrés. La liaison pivot est décalée vers l'arrière du tube de roue arrière. La liberté en rotation de la roue arrière conférée par la liaison pivot du support de roue arrière, permet à la roue arrière de rapidement adapter son orientation autour de l'axe de rotation par rapport à la direction de mouvement du chariot et à la topologie du terrain. Cette agilité améliore la stabilité du chariot pendant son mouvement. De plus, elle renforce la facilité de manoeuvrer le chariot pour l'utilisateur.

Le tube principal et la cage sont alignés avec l'axe central et sont inclinés vers l'arrière avec un angle α compris entre 40 degrés et 60 degrés, de préférence entre 45 degrés et 55 degrés par rapport à la verticale et de manière générale par rapport à une ligne perpendiculaire à la surface de terrain. Ce dernier point permet de rapprocher le centre de gravité du chariot vers le milieu du triangle isocèle 200 défini par les centres des roues. En conséquence le chariot gagne en stabilité. Cette stabilité accrue se manifeste surtout sur des pentes ou des terrains irréguliers, soit bosselés.

Comme le centre de gravité est maintenu à l'intérieur de l'espace de projection verticale en direction opposée de la force de gravité du triangle isocèle 200, même si le chariot prend une position inclinée vers l'arrière ou l'avant, par exemple en traversant une pente, le chariot est moins susceptible de se balancer ou de se renverser. La stabilité durant une inclinaison latérale du chariot est également améliorée grâce à cette positionnement avantageux du centre de gravité.

Un autre avantage de l'inclinaison à l'angle *α* de l'axe central du chariot concerne l'aspect ergonomique. Par exemple, pour des chariots de golf, avec le sac de golf qui est plus incliné que dans des modèles usuels, l'utilisateur peut glisser un club dans et hors le sac sans besoin de lever le bras pour le prendre ou déposer.

Grâce à son mécanisme de pliage fluide, l'ouverture et la fermeture du chariot peuvent être effectués en moins de 3 secondes, idéalement en moins de 1,5 secondes. Cette efficacité et cette facilité de manipulation rendent l'utilisation du chariot extrêmement ergonomique.

Le chariot de transport décrit par la présente invention est adapté à toute une série d'applications différentes. Ces applications comprennent le transport de conteneurs de gaz ou de liquides, par exemple en milieu hospitalier ou industriel. Il peut également être utilisé pour transporter des charges empilables. Il pourrait être utile pour transporter des objets dans des entrepôts et sur des chantiers de construction. De même il pourrait servir au transport de personnes handicapées. On peut même imaginer que le système de pliage décrit dans la présente invention puisse être utile pour les poussettes pour enfants en bas âge. L'invention n'est pas limitée à ces exemples et d'autres applications sont possibles.

### Brève description des figures

Des exemples de mise en oeuvre de l'invention sont indiqués dans la description illustrée par les figures annexées dans lesquelles :
- **Figure1** est une représentation schématique d'un exemple d'un chariot de golf sans plaque frontale .
- **Figures 2a à 2c** montrent schématiquement la cage du chariot avec le tube principal :

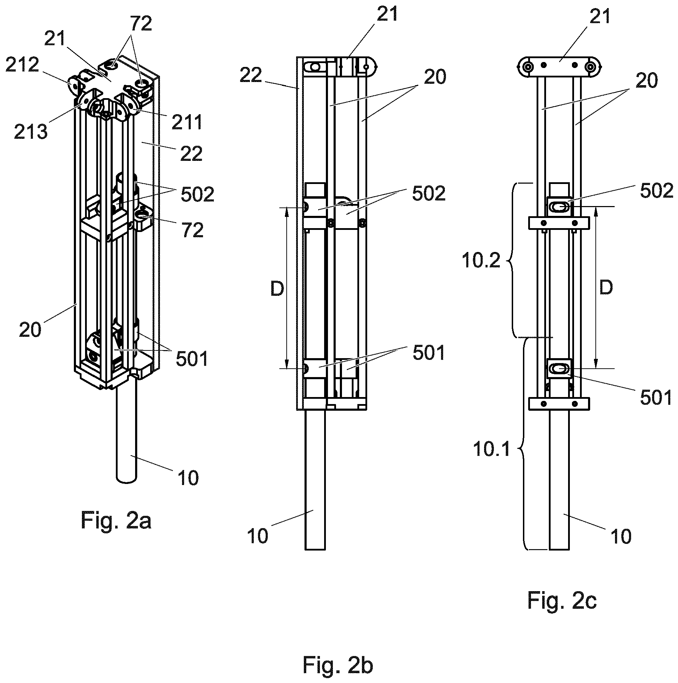

   **Figure 2a** est une vue 3D de la cage avec le tube principal,
   **Figure 2b** est une vue latérale de la cage avec le tube principal,
   **Figure 2c** est une vue de devant de la cage avec le tube principal, dans laquelle la plaque frontale est enlevée.

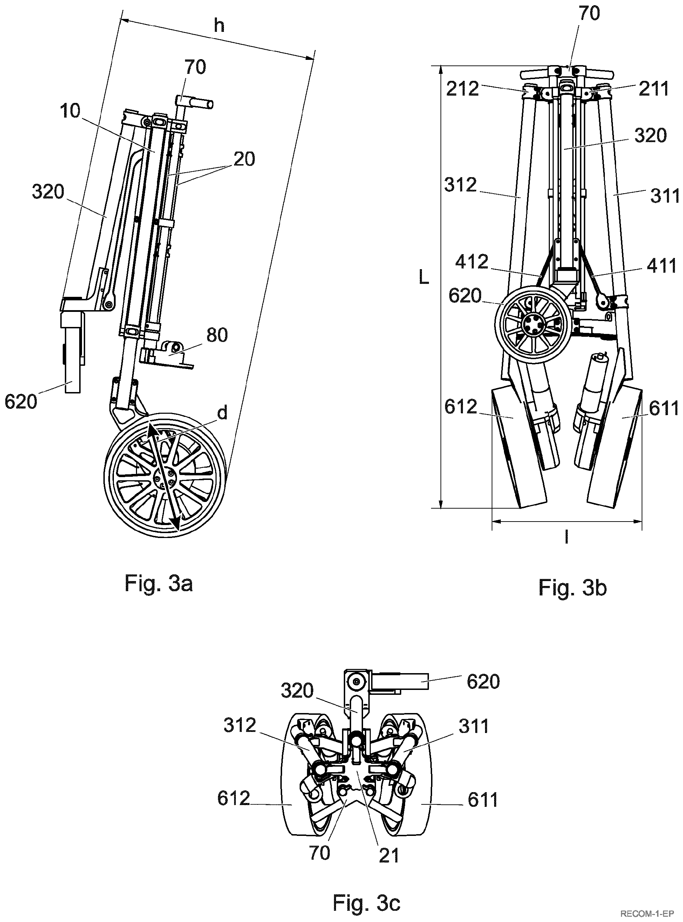

- **Figure 3a à 3c** illustrent schématiquement les dimensions d'un exemple de chariot de golf dans sa position pliée :
   **Figure 3a** est une vue de l'arrière du chariot plié,
   **Figure 3b** est une vue latérale du chariot plié,
   **Figure 3c** est une vue de dessus du chariot plié.

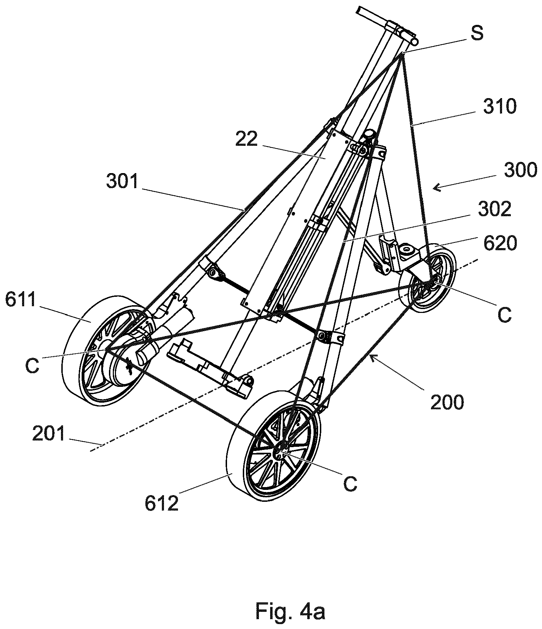

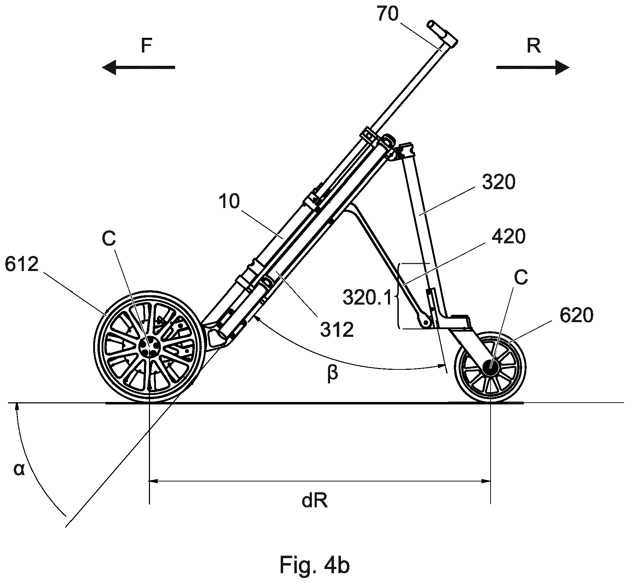

- **Figure 4a** **et** **4b** illustrent schématiquement la géométrie du chariot déployé :
   **Figure 4a** illustre schématiquement la structure pyramidale inclinée du chariot,
   **Figure 4b** illustre schématiquement l'angle d'inclinaison α et l'angle d'ouverture β du chariot déployé.

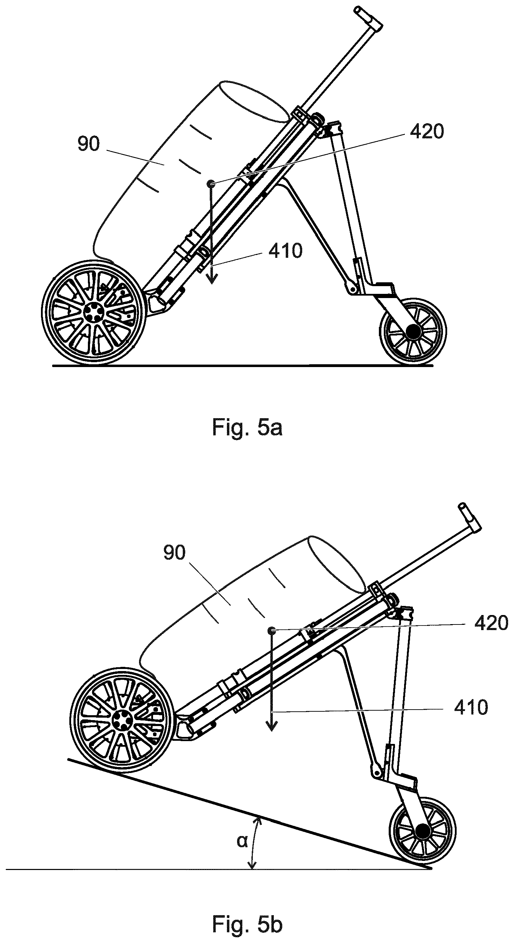

- **Figure 5a à 5c** illustrent schématiquement le mouvement du vecteur de masse du chariot chargé sur des terrains de divers dégrées d'inclinaison :
   **Figure 5a** montre un schéma du chariot sur terrain plat,
   **Figure 5b** montre un schéma du chariot sur une pente montante.

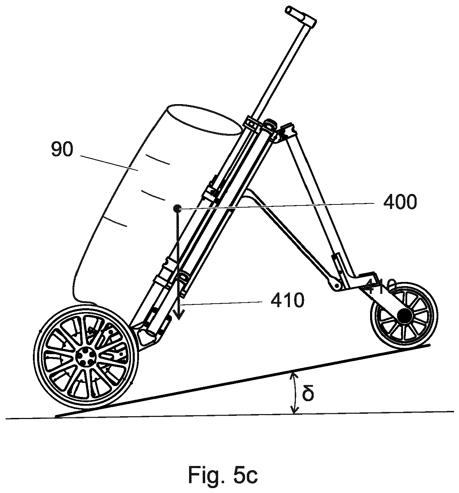

   **Figure 5c** montre un schéma du chariot sur une pente descendante.

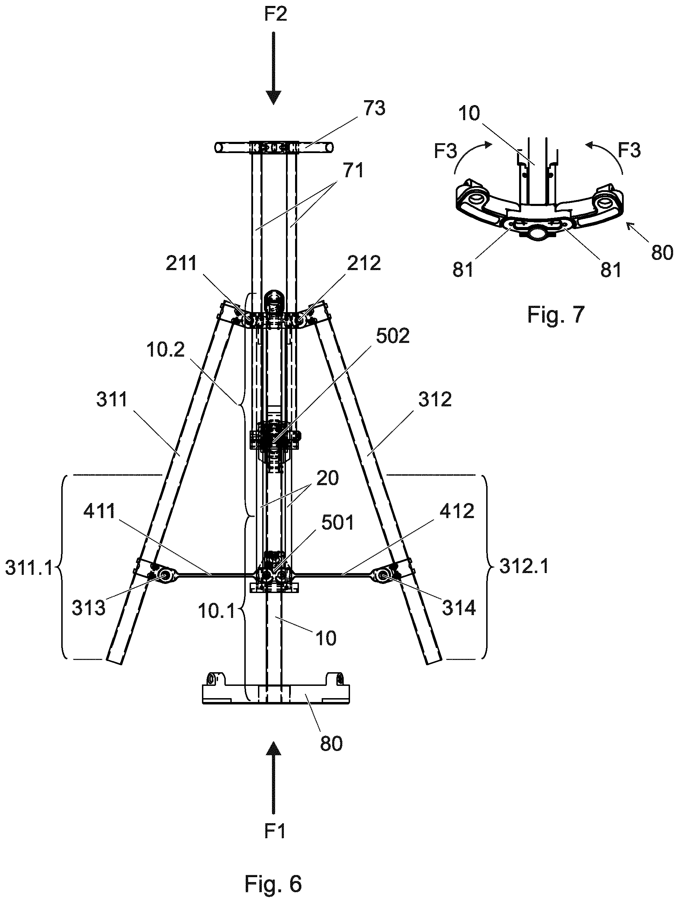

- **Figure 6** illustre schématiquement le mouvement de translation du tube principal et de l'élément de préhension par rapport à la cage.
- **Figure 7** illustre schématiquement l'élément de préhension du chariot.

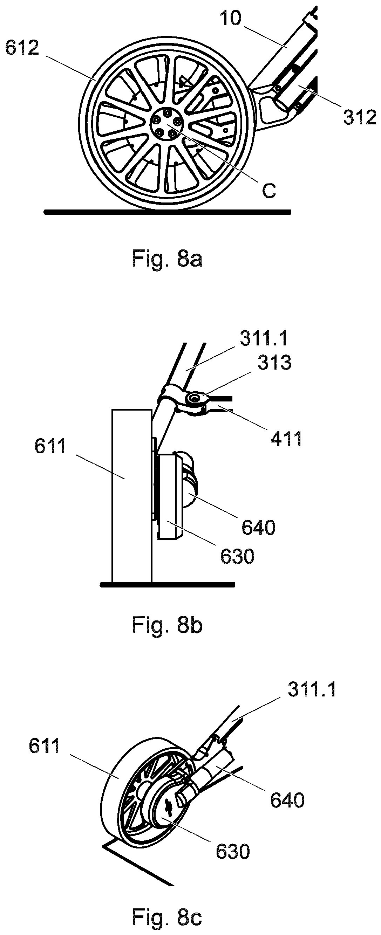

- **Figure 8a à 8c** montrent des vues schématiques des roues avant du chariot :
   **Figure 8a** montre une vue latérale d'une roue avant,
   **Figure 8b** montre une vue de devant d'une roue avant,
   **Figure 8c** montre une vue du côté intérieur d'une roue avant.

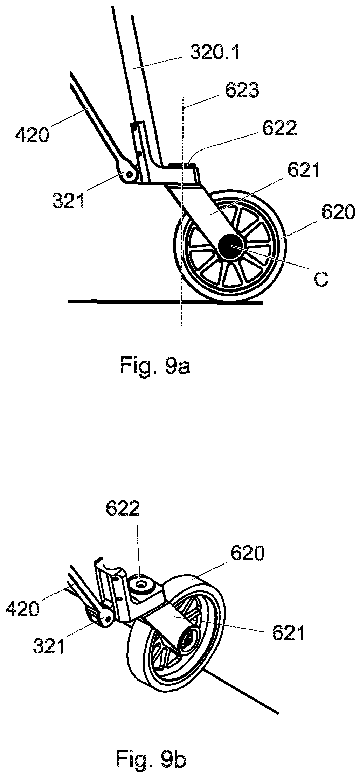

- **Figure 9a et 9b** montrent des vues schématiques de la roue arrière :
   **Figure 9a** montre une vue latérale de la roue arrière.
   **Figure 9b** montre une vue 3D de la roue arrière.

### Exemple(s) de mode de réalisation de l'invention

La présente invention concerne un chariot de transport pliable à trois roues, adapté pour le transport des objets ou des contenant. Plus spécifiquement, la présente invention décrit un chariot d'équipement de sport. En particulier le chariot est un chariot de golf.

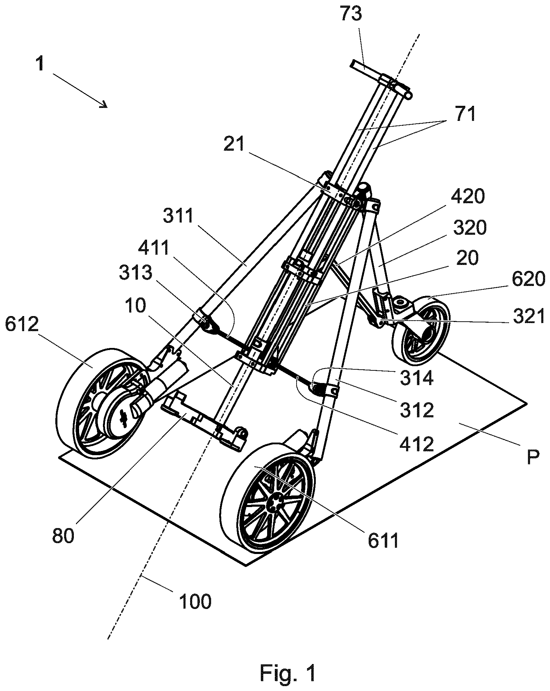

Comme le montre la figure 1, le chariot 1 est équipé de deux roues avant 611 et 612, d'une roue arrière 620, d'un tube principal 10, d'une cage 20, de deux tubes de roue avant 311, 312, d'un tube de roue arrière 320 et d'un système de bielles comprenant deux bielles avant 411, 412 et une bielle arrière 420.

Le tube principal 10 est au moins partiellement inséré dans la cage 20. La cage 20 est de préférence couverte d'une plaque frontale 22, comme il est montré dans les figures 2a, 2b et 4a. Le tube principal 10 peut être glissé de manière réversible dans la cage 20 en un mouvement de translation le long de l'axe central 100 du chariot 1. L'axe central 100 est la ligne géométrique correspondant à la bissectrice de deux tubes de roues avant 311, 312. Le mouvement de translation du tube central 10 par rapport à la cage 20 est crucial pour le mécanisme de pliage du chariot 1.

Le tube principal 10 peut être glissé dans la cage 20, par exemple en poussant ledit tube depuis son extrémité la plus proche des roues avant 611, 612. Le tube principal 10 peut aussi être glissé dans la cage 20 en tirant un élément supplémentaire destiné à ce but, qui est fixé au tube central 10 et fait saillie hors de la cage 20.

Les tubes de roues 311, 312, 320 fournissent le lien entre les roues 611, 612, 620 et la cage 20. Leur extrémité la plus éloignée des roues est attachée à la cage 20 de manière pivotante. De préférence, leur point de pivotement 211, 212, 213 est situé dans un empattement 21 monté à l'extrémité de la cage 20 la plus éloignée des roues avant 611, 612.

Le mouvement du tube principal 10 par rapport à la cage 20 est transféré au mouvement pivotant des tubes de roues 311, 312, 320 au moyen du système de bielles.

La figure 2 montre plus en détail l'agencement de la cage 20 et du tube principal 10 avec les points des fixations des tube de roues 211, 212, 213 et des bielles 313, 314, 321.

Une extrémité de chacune des deux bielles avant 313, 314est fixée de manière pivotante à une première portion 10.1 du tube principal 10. Cette première portion 10.1 correspond à la portion du tube principal 10 proche des roues avant 611, 612.

La distance entre le point de pivotement 313 de la bielle avant 411 et l'extrémité du tube principal la plus proche des roues avant est égale à la distance entre le point de pivotement 314 de la bielle avant 412 et l'extrémité du tube principal la plus proche des roues avant. A cet effet, de préférence, comme on peut le voir sur la figure 6, chacun desdits points de pivotement 313, 314 est relié au tube principal 10 au moyen d'un unique premier élément de fixation 501 comprenant les deux points de pivotement 313, 314.

Dans la position entièrement déployée du chariot 1, les deux bielles avant 411, 412 prennent une orientation perpendiculaire au tube central 10 (voir la figure 6). L'écartement maximum des tubes de roues 311, 312 est limitée par la longueur des bielles avant 411, 412. Le chariot 1 est déployé au maximum, lors que les bielles avant 411, 412 sont perpendiculaires au tube principal.

Chaque deuxième extrémité des deux bielles avant 411, 412 est fixée de manière pivotant à une première portion 311.1, 311.2 des tubes de roues avant. Cette portion 311.1, 311.2 des tubes de roues avant correspond à la portion proche des roues avant 611, 612 (voir figure 6).

Lorsque le tube principal 10 est glissé dans la cage 20, le premier élément de fixation 501 comprenant les points de fixation 313, 314 des bielles avant 411, 412 suit le mouvement de translation du tube principal par rapport à la cage 20, en direction opposée des roues avant 611, 612. Avec ce mouvement, les bielles avant 411, 412 tirent la première portion des tubes de roues avant vers l'axe principal 10.

Une extrémité de la bielle arrière 320 est fixée de manière pivotante à une deuxième portion 10.2 du tube principal 10. Cette deuxième portion 10.2 correspond à la portion la plus éloignée des roues avant 611 et 612.

De préférence, le point de pivotement de la bielle arrière 420 est relié au tube principal 10 au moyen d'un deuxième élément de fixation 502.

Le premier élément de fixation 501 des bielles avant 411, 412 et le deuxième élément de fixation 502 de la bielle arrière 420 sont fixés au tube principal 10 à une distance D de l'un à l'autre.

Ladite distance D est adéquate pour empêcher un pliage involontaire du chariot 1. Ce paramètre ajoute donc à la stabilité du chariot déployé. La distance D varie en fonction de la taille du chariot. La distance D peut être entre 20 % et 70 % de la longueur de la cage, idéalement entre 40 % et 60 % de la longueur de la cage.

Lors que le tube principal 10 est glissé dans la cage 20, le deuxième élément de fixation 502 comprenant le point de fixation de la bielle arrière 420 suit le mouvement de translation du tube principal 10 en direction opposée des roues avant. Avec ce mouvement, la bielle arrière 420 tire ou ramène la première portion du tube de roue arrière 320.1 vers l'axe principal 10.

Ce mouvement de translation du tube principal 10 dans l'intérieur de la cage 20 induit donc la transition de la position déployée du chariot vers sa position pliée et inversement. Cette position pliée est atteinte dès que les tube de roues 311, 312, 320 prennent une position parallèle ou sensiblement parallèle au tube principal 10.

La position pliée est montrée plus en détail sur la figure 3.

À titre d'exemple, pour un chariot de golf, la longueur L du chariot entièrement plié est comprise entre 800 mm et 1'000 mm, et est idéalement d'environ 900 mm. Pour le même modèle exemplaire, la largeur I du chariot entièrement plié est comprise entre 250 mm et 350 mm, et est idéalement d'environ 307 mm. De même, la hauteur h est comprise entre 300 mm et 500 mm, et est idéalement d'environ 402 mm. Ces dimensions sont en outre basées sur un diamètre des roues avant entre 350 mm et 180mm, idéalement environ 248 mm.

Dans sa position entièrement déployée, le même modèle de chariot de golf présente un angle β d'ouverture défini par le tube central 10 et le tube de roue arrière 320 compris entre 40 degrés et 60 degrés, de préférence compris entre 45 degrés et 55 degrés, idéalement d'environ 50 ± 2 degrés. Pour les dimensions susmentionnées, la distance entre les centres des roues avant et la roue arrière dR (voir figure 4b) est comprise entre 700 mm et 850 mm, et est idéalement d'environ 760 mm.

Comme il est montré sur la figure 4a, les centres des trois roues du chariot définissent les sommets d'un triangle isocèle 200 comprenant un axe de symétrie centrale 201, qui forme la bissectrice des deux droites passant entre le centre de l'une des roues avant et le centre de la roue arrière.

La forme géométrique approximative du chariot 1 dans sa position déployée ressemble essentiellement à une pyramide 300 basée sur ledit triangle isocèle 200 (voir figure 4a). Cette structure pyramidale est inclinée vers l'arrière dans la position déployée du chariot. Les arêtes latérales 301, 302 de ladite pyramide s'étendent depuis les centres des roues avant 611, 612, l'arête arrière 310 s'étend depuis le centre de la roue arrière 620, et les trois arêtes 301, 302 et 310 s'étendent jusqu'à un sommet S situé sur ou à proximité de l'élément de préhension 70. Ce sommet S n'est pas situé à l'aplomb du centre du triangle isocèle 200, mais la projection verticale de ce sommet S sur le triangle isocèle 200 est plus proche du centre de la roue arrière 620 que du centre de l'une ou l'autre des roues avant 611 et 612.

Dans la position déployée, l'axe central 100, aussi que les éléments γ alignés, γ compris le tube principal 10 et la cage 20, sont inclinés vers l'arrière d'un angle α mesuré par rapport à un plan P passant par les points de contact des trois roues 611, 612 et 620 avec le sol, comme il est illustré dans la figure 4b. Cet angle α prend une valeur comprise entre 35 degrés et 70 degrés, de préférence comprise entre 45 degrés et 55 degrés, est idéalement d'environ 50 ± 1 degrés.

La même figure 4b montre la position décalée des roues par rapport à leurs tubes de roue. Les roues avant 611, 612 sont décalées vers l'avant (flèche F) par rapport à leur tube de roues avant 311, 312 respectif, avec un montage fixe des roues avant 611, 612 par rapport à leur tube de roues avant 311, 312 respectif. Ce décalage est également montré dans la figure 8a. La liaison pivot 622 de la roue arrière 620 est décalée vers l'arrière (flèche R) par rapport au tube de roue arrière 320. Ce décalage vers l'arrière (flèche R) est également montré dans la figure 9a.

En conséquence de ce décalage entre chaque centre des roues et de leur tube de roue respectif, le centre de gravité 400 de la charge du chariot 1, par exemple du sac de golf, est ramené vers l'intérieur de la forme géométrique pyramidale du chariot 1. Autrement dit, la charge se trouve à l'intérieur de l'espace défini par la projection verticale en direction opposée de la force de gravité du triangle isocèle 200 formé par les centres des roues.

Comme le montrent les figures 5a, 5b, 5c, le vecteur de masse 410 de la charge (ici un sac de golf 90) et le chariot 1, qui part du centre de gravité 400, est dirigé vers le noyau terrestre. En raison dudit décalage des roues 611, 612 (et 620) et de l'angle d'inclinaison α de l'axe central 10, le vecteur de masse 410 reste à l'intérieur de l'espace défini par les projections verticales centres des roues 611, 612 et 620, et ce même sur des terrains avec un angle d'inclinaison γ, δ important par rapport à une surface horizontale. Par conséquent, le point de basculement du chariot 1 chargé, en fonction de la pente du terrain, est amélioré. Le chariot 1 selon l'invention peut transporter sa charge, comme un sac de golf par exemple, au travers de pentes raides tout en restant stable.

Les flèches F1 et F2 de la figure 6 indiquent, respectivement, la direction du mouvement de translation du tube principal 10 et la direction du mouvement de translation de l'élément de préhension 70, par rapport à la cage 20, lors du pliage du chariot 1. Le mouvement inverse de dépliage correspond à des flèches (non représentées) de sens inverse. L'élément de préhension 70 comprend au moins un tube 71, deux tubes dans un mode de réalisation préféré tel que représenté, et optionnellement un guidon 73 ou élément similaire fixé dans la portion d'extrémité libre de ce(s) tube(s), pour faciliter le maniement du chariot 1. Le mouvement de(s) tube(s) 71 peut être guidé par des trous 72 pour insertion reliés à la cage 20.

L'élément de préhension 70 peut être verrouillé dans sa position rétractée ou sortie, respectivement en étant logé en majeure partie dans la cage ou ressorti en majeure partie de la cage, ou dans une position intermédiaire, par exemple en encliquetant un bouton élastique qui peut se verrouiller ou se déverrouiller dans un des logements qui lui sont associés. Des mécanismes alternatifs de pliage pour l'élément de préhension sont également envisageable. On peut s'imaginer, par exemple, un mécanisme de pliage rotatif vers l'avant ou vers l'arrière pour plier l'élément de préhension. On peut aussi s'imaginer un mécanisme de pliage télescopique pour l'élément de préhension.

Lors du pliage du chariot 1, l'élément de support 80 peut également être plié. Les flèches F3 de la figure 7 montrent le pliage rotatif des extrémités de l'élément de support 80 autour de ses points de pivotement 81, qui peut être utilisé pour un chariot de golf exposé dans le texte et illustré sur les dessins à titre d'exemple. Cet élément support permet également de bien s'adapter à des dimensions différentes de sacs de golf. L'élément de support 80 se rétracte lors du pliage grâce à son attachement au tube 10, ceci évitant un conflit de contact avec les roues avant.

L'orientation prise par une roue avant dans la position déployée du chariot 1 est montrée sur la figure 8. Le décalage de la roue avant 612 vers l'avant (flèche F) par rapport à son tube de roue 312 est visible dans figure 8a.

En d'autres termes, le centre C des roues avant n'est pas sécant avec une prolongation du tube de roue correspondant 311, 312, et ce centre C de roue avant est placé à l'avant par rapport à cette prolongation du tube de roue correspondant 311, 312, c'est-à-dire du coté de cette prolongation, qui est opposé à la roue arrière 620.

L'orientation de la roue avant 611 est ni une extension de l'orientation du tube de roue, ni un alignement parallèle avec ledit tube de roue 311, comme il est montré sur la figure 8b. Il existe en effet un angle non nul entre le plan moyen de chaque roue avant 611, 612 et l'axe du tube de roue correspondant. Dans la configuration choisie pour le mode de réalisation représenté, le plan moyen des roues avant 611, 612 est parallèles à l'axe central 100 dans la position déployée du chariot 1, comme le montre par exemple la figure 1. On peut également constater que les deux roues avant 611, 612 sont parallèles à l'axe de symétrie centrale 201 du triangle isocèle 200, comme il est montré dans la figure 4a.

Dans sa version motorisée le chariot 1 emploie un système de traction en utilisant des moteurs, par exemple à engrenages, alimentés par batterie entraînant les deux roues avant 611, 612. Le système de transmission 630 et le moteur 640 sont agencés du côté intérieur de chaque roue avant, comme il est montré dans figure 8c.

En option, les moteurs ainsi qu'un système de guidage peuvent être contrôlés à distance, par exemple en utilisant une télécommande.

Comme on le voit sur la figure 9a, pour décaler la roue arrière 620 vers l'arrière par rapport au tube de roue arrière 320, la liaison pivot 622 de la roue arrière est situé derrière ledit tube de roue arrière 320. En plus, un élément de support 621, qui relie la roue arrière 620 a son point de pivotement 622, est incliné par rapport à l'axe d'extension du tube de roue arrière 320. Par conséquence, la liaison pivot 622 entre le support de roue arrière 621 et le tube de roue arrière 320 n'est pas située à l'aplomb de l'axe de rotation de la roue arrière 320. La roue arrière320 tourne facilement autour de l'axe de rotation X de la liaison pivot 622, lui permettant de remettre son axe de rotation dans une position convenable à la direction de déplacement du chariot 1. Cet agencement pivotable permet à la roue arrière 320 également de s'adapter facilement à des irrégularités du terrain. Équipé d'une roue arrière décalée et pivotable 620, le chariot 1 évite des basculements et dévient davantage stable sur le terrain.

Comme il ressort du texte précédent et des figures, le terme « arrière » désigne tout le côté du chariot 1 comprenant l'élément de préhension 70 et la roue arrière 620, lorsque le chariot est debout sur ses roues et dans la position déployée. C'est depuis ce côté arrière du chariot 1 que se place l'utilisateur lorsqu'il pousse manuellement le chariot pour le faire avancer en direction avant, ou pour le faire reculer en le tirant vers l'arrière. De même, le terme « avant » désigne tout le côté du chariot comprenant les deux roues avant 611 et 612 ainsi que l'élément de support 80.

## Revendications

1. Un chariot de transport (1) pliable comprenant
- deux roues avant (611, 612) et une roue arrière (620), chaque roue (611, 612, 620) étant attachée à
- un tube de roue (311, 312, 320), l'extrémité des tubes de roue la plus éloignée de leur roue respective (611, 612, 620) étant connectée de manière pivotante à
- une cage centrale (20),
- une première portion (311.1, 312.1, 320.1) des tubes de roue (311, 312, 320) étant reliée de manière pivotante par une bielle (411, 412, 420) à un tube principal (10) inséré au moins partiellement dans la cage centrale (20), ledit tube principal (10) étant capable d'effectuer un mouvement de translation par rapport à la cage centrale (20) le long d'un axe central (100) formant la bissectrice des deux tubes de roues avant (311, 312), dans lequel les tubes de roue (311, 312, 320) et le tube principal (10) peuvent passer de manière réversible entre une position pliée et une position déployée, et
- un élément de support (80) adapté à recevoir une charge et lié au tube principal (10) ou à la cage (20), **caractérisé**
- **en ce que** les centres de rotation (C) des trois roues (611, 612, 620) forment un triangle isocèle (200) dans la position déployée du chariot (1), la roue arrière (320) étant en position du sommet principal dudit triangle (200) définissant un angle inférieur à 60 degrés, et
- **en ce que** le chariot (1) dans la position déployée reprend sensiblement une forme géométrique d'une structure pyramidale (300) basée sur ledit triangle isocèle (200) et inclinée vers l'arrière dans la position déployée du chariot (1).

2. Un chariot de la revendication 1, comprenant deux bielles avant (411, 412) et une bielle arrière (420), une première extrémité de chaque bielle (411, 412, 420) étant fixée de manière pivotante au tube principal (10), le point de pivotement des bielles (411, 412, 420) relié au tube principal étant apte à effectuer le mouvement de translation conjointement avec le tube principal (10), et une deuxième extrémité de chaque bielle (411, 412, 429) étant reliée de manière pivotante à un tube de roue (311, 312, 320).

3. Un chariot selon l'une des revendications 1 ou 2, les tubes de roue (311, 312, 320) et le tube principal (10) étant sensiblement parallèles l'un par rapport à l'autre lorsque le chariot (1) prend une position pliée.

4. Un chariot selon l'une des revendications 1 à 3, le chariot (1) étant adapté pour
- passer de sa position déployée à sa position pliée lorsque le tube principal (10) effectue un mouvement de translation en direction opposée des roues avant (611, 612) le long de l'axe central (100), et
- passer de sa position pliée à sa position déployée lorsque le tube principal effectue un mouvement de translation en direction des roues avant (611, 612) le long de l'axe central (100).

5. Un chariot selon l'une des revendications 1 à 4, l'ouverture du chariot (1) de sa position pliée à sa position déployée s'effectue par simple manoeuvre d'écartement entre eux de deux des trois tubes de roue (311, 312, 320).

6. Un chariot selon l'une des revendications 1 à 5, la fermeture du chariot (1) de sa position déployée à sa position pliée s'effectue par simple manoeuvre de glissement du tube principal (10) dans la cage (20) le long l'axe centrale (100) en direction opposée des roues avant (611, 612).

7. Un chariot selon la revendication 2, et éventuellement aussi selon l'une des revendications 3-6, comprenant un premier élément de fixation (501) qui retient une des extrémités des deux bielles avant (411, 412) de manière solidaire au tube principal (10), et un deuxième élément de fixation (502), qui retient une extrémité de la bielle arrière (420) de manière solidaire au tube principal (10).

8. Un chariot de la revendication 7, dans lequel l'écart entre ledit premier élément de fixation (501) et ledit deuxième élément de fixation (502) correspond à au moins 10%, préférablement à au moins 25%, de la longueur de la cage centrale (20).

9. Un chariot selon l'une des revendications 1 à 9, dans lequel l'angle d'inclinaison, défini entre l'axe central (100) et l'axe de symétrie centrale (201) du triangle isocèle (200) formé entre les centres (C) des trois roues (611, 612, 620), est compris entre 35 degrés et 70 degrés, de préférence entre 45 degrés et 55 degrés, idéalement 50 ± 1 degrés.

10. Un chariot selon l'une des revendications 1 à 9, dans lequel le chariot (1) est agencé de sorte que l'extension du vecteur de masse (410) du chariot (1) chargé coupe l'axe de symétrie centrale (201) du triangle isocèle (200) formé entre les centres (C) des trois roues (611, 612, 620).

11. Un chariot selon l'une des revendications 1 à 10, dans lequel les roues avant (611, 612) sont décalées du tube de roue (311, 312) correspondant vers l'avant.

12. Un chariot selon l'une des revendications 1 à 11, dans lequel chaque roue avant (611, 612) présente une orientation inclinée par rapport au tube de roue correspondant (311, 312), l'orientation de chaque roue avant (611, 612) étant de préférence parallèle à l'axe central (100).

13. Un chariot selon l'une des revendications 1 à 12, dans lequel la roue arrière (620) est tenue par un support de roue (621) pivotant par rapport au tube de roue arrière (320), ledit support de roue (621) étant relié par une liaison pivot (622) de manière décalée vers l'arrière au tube de roue arrière (320).

14. Un chariot selon la revendication 13, dans lequel la direction principale du support de roue arrière (621) n'est pas parallèle avec le tube de roue arrière (320).

15. Un chariot selon l'une des revendications 1 à 14, comprenant un élément de préhension (70), qui comprend un tube (71) et, optionnellement, un guidon (72), qui s'étend vers l'arrière parallèlement à l'axe central (100) et qui est au moins en partie inséré dans la cage (20), adapté à permettre manuelle la manoeuvre d'avancée ou de recul du chariot (1).

16. Un chariot selon l'une des revendications 1 à 15, dans lequel le chariot (1) est motorisé par un système de traction alimenté par batterie entraînant les deux roues avant (611, 612).

## Patentansprüche

1. Ein zusammenklappbarer Transportwagen (1), der Folgendes umfasst
- zwei Vorderrädern (611, 612) und einem Hinterrad (620), wobei jedes Rad (611, 612, 620) befestigt ist an
- ein Radrohr (311, 312, 320), wobei das Ende der Radrohre, das am weitesten von ihrem jeweiligen Rad (611, 612, 620) entfernt ist, schwenkbar verbunden ist mit
- einem zentralen Käfig (20),
- wobei ein erster Abschnitt (311.1, 312.1, 320. 1) der Radrohre (311, 312, 320), der über eine Pleuelstange (411, 412, 420) schwenkbar mit einem Hauptrohr (10) verbunden ist, das zumindest teilweise in den zentralen Käfig (20) eingesetzt ist, wobei das Hauptrohr (10) eine Translationsbewegung relativ zum zentralen Käfig (20) entlang einer Mittelachse (100), die die Winkelhalbierende der beiden Vorderradrohre (311, 312) bildet, ausführen kann, wobei die Radrohre (311, 312, 320) und das Hauptrohr (10) reversibel zwischen einer zusammengeklappten Position und einer entfalteten Position wechseln können, und
- ein Stützelement (80), das zur Aufnahme einer Last geeignet und mit dem Hauptrohr (10) oder dem Käfig (20) verbunden ist,
**dadurch gekennzeichnet**
- **dass** die Drehzentren (C) der drei Räder (611, 612, 620) in der entfalteten Position des Transportwagens (1) ein gleichschenkliges Dreieck (200) bilden, wobei sich das Hinterrad (320) in der Position der Hauptspitze des Dreiecks (200) befindet, die einen Winkel von weniger als 60 Grad definiert, und
- **dass** der Transportwagen (1) in der entfalteten Position im Wesentlichen eine geometrische Form einer pyramidenförmigen Struktur (300) annimmt, die auf dem gleichschenkligen Dreieck (200) basiert und in der entfalteten Position des Transportwagens (1) nach hinten geneigt ist.

2. Der Transportwagen nach Anspruch 1, mit zwei vorderen Pleuelstangen (411, 412) und einer hinteren Pleuelstange (420), wobei ein erstes Ende jeder Pleuelstange (411, 412, 420) schwenkbar am Hauptrohr (10) befestigt ist, wobei der Schwenkpunkt der Pleuelstangen (411, 412, 420), der mit dem Hauptrohr verbunden ist, dazu geeignet ist, die Translationsbewegung gemeinsam mit dem Hauptrohr (10) auszuführen, und ein zweites Ende jeder Pleuelstange (411, 412, 429) schwenkbar mit einem Radrohr (311, 312, 320) verbunden ist.

3. Der Transportwagen nach einem der Ansprüche 1 oder 2, wobei die Radrohre (311, 312, 320) und das Hauptrohr (10) im Wesentlichen parallel zueinander sind, wenn der Transportwagen (1) eine zusammengeklappte Position einnimmt.

4. Der Transportwagen nach einem der Ansprüche 1 bis 3, wobei der Transportwagen (1) derart ausgebildet ist,
- von seiner entfalteten Position in seine zusammengeklappte Position zu wechseln, wenn das Hauptrohr (10) eine Translationsbewegung in entgegengesetzter Richtung zu den Vorderrädern (611, 612) entlang der Mittelachse (100) ausführt, und
- aus seiner zusammengeklappten Position in seine entfaltete Position zu wechseln, wenn das Hauptrohr eine Translationsbewegung in Richtung der Vorderräder (611, 612) entlang der Mittelachse (100) ausführt.

5. Der Transportwagen nach einem der Ansprüche 1 bis 4, wobei das Öffnen des Transportwagens (1) von seiner zusammengeklappten Position in seine entfaltete Position durch einfaches Auseinanderziehen von zwei der drei Radrohre (311, 312, 320) erfolgt.

6. Der Transportwagen nach einem der Ansprüche 1 bis 5, wobei das Zusammenklappen des Transportwagens (1) von seiner entfalteten Position in seine zusammengeklappte Position durch ein einfaches Gleitmanöver des Hauptrohrs (10) im Käfig (20) entlang der Mittelachse (100) in entgegengesetzter Richtung zu den Vorderrädern (611, 612) erflogt.

7. Der Transportwagen nach Anspruch 2, und gegebenenfalls auch nach einem der Ansprüche 3 bis 6, mit einem ersten Befestigungselement (501), das eines der Enden der beiden vorderen Pleuelstangen (411, 412) fest an dem Hauptrohr (10) hält, und einem zweiten Befestigungselement (502), das ein Ende der hinteren Pleuelstange (420) fest an dem Hauptrohr (10) hält.

8. Der Transportwagen nach Anspruch 7, wobei der Abstand zwischen dem ersten Befestigungselement (501) und dem zweiten Befestigungselement (502) mindestens 10%, vorzugsweise mindestens 25%, der Länge des zentralen Käfigs (20) entspricht.

9. Der Transportwagen nach einem der Ansprüche 1 bis 9, wobei der Neigungswinkel, der zwischen der Mittelachse (100) und der zentrale Symmetrieachse (201) des gleichschenkligen Dreiecks (200), das zwischen den Mittelpunkten (C) der drei Räder (611, 612, 620) gebildet wird, definiert ist, zwischen 35 Grad und 70 Grad, vorzugsweise zwischen 45 Grad und 55 Grad, idealerweise 50 ± 1 Grad, beträgt.

10. Der Transportwagen nach einem der Ansprüche 1 bis 9, wobei der Transportwagen (1) so ausgebildet ist, dass die Ausdehnung des Massenvektors (410) des beladenen Transportwagens (1) die zentrale Symmetrieachse (201) des gleichschenkligen Dreiecks (200), das zwischen den Mittelpunkten (C) der drei Räder (611, 612, 620) gebildet wird, schneidet.

11. Der Transportwagen nach einem der Ansprüche 1 bis 10, bei dem die Vorderräder (611, 612) vom entsprechenden Radrohr (311, 312) nach vorne versetzt sind.

12. Der Transportwagen nach einem der Ansprüche 1 bis 11, wobei jedes Vorderrad (611, 612) eine geneigte Ausrichtung in Bezug auf das entsprechende Radrohr (311, 312) aufweist, und wobei die Ausrichtung jedes Vorderrads (611, 612) vorzugsweise parallel zur Mittelachse (100) ist.

13. Der Transportwagen nach einem der Ansprüche 1 bis 12, bei dem das Hinterrad (620) von einem Radträger (621) gehalten wird, der relativ zum Hinterradrohr (320) schwenkbar ist, wobei der Radträger (621) über eine Schwenkverbindung (622) nach hinten versetzt mit dem Hinterradrohr (320) verbunden ist.

14. Der Transportwagen nach Anspruch 13, bei dem die Hauptrichtung des Hinterradträgers (621) nicht parallel zum Hinterradrohr (320) verläuft.

15. Der Transportwagen nach einem der Ansprüche 1 bis 14, mit einem Greifelement (70), das ein Rohr (71) und optional eine Lenkstange (72) umfasst, das sich parallel zur Mittelachse (100) nach hinten erstreckt und zumindest teilweise in den Käfig (20) eingesetzt ist, und das dazu geeignet ist, das Vorwärts- oder Rückwärtsmanöver des Transportwagens (1) manuell zu ermöglichen.

16. Der Transportwagen nach einem der Ansprüche 1 bis 15, wobei der Transportwagen (1) durch ein batteriebetriebenes Antriebssystem motorisiert ist, das die beiden Vorderräder (611, 612) antreibt.

## Claims

1. A foldable transport cart (1) comprising
- two front wheels (611, 612) and a rear wheel (620), each wheel (611, 612, 620) being attached to
- a wheel tube (311, 312, 320), the end of the wheel tubes furthest from their respective wheel (611, 612, 620) being pivotally connected to
- a central cage (20),
- a first portion (311.1, 312.1, 320.1) of the wheel tubes (311, 312, 320) being pivotally connected by a connecting rod (411, 412, 420) to a main tube (10) inserted at least partially into the central cage (20), said main tube (10) being capable of translational movement relative to the central cage (20) along a central axis (100) forming the bisector of the two front wheel tubes (311, 312), wherein the wheel tubes (311, 312, 320) and the main tube (10) are reversibly movable between a folded and an extended position, and
- a support member (80) adapted to receive a load and connected to the main tube (10) or the cage (20), **characterised in that** the support member (80) is connected to the main tube (10) or the cage (20),
**characterised**
- **in that** he centres of rotation (C) of the three wheels (611, 612, 620) form an isosceles triangle (200) in the extended position of the carriage (1), the rear wheel (320) being in the position of the main apex of said triangle (200) defining an angle of less than 60 degrees, and
- **in that** the carriage (1) in the extended position substantially assumes a geometrical shape of a pyramidal structure (300) based on said isosceles triangle (200) and inclined backwards in the extended position of the carriage (1).

2. The transport cart of claim 1, comprising two front connecting rods (411, 412) and a rear connecting rod (420), a first end of each connecting rod (411, 412, 420) being pivotally attached to the main tube (10), the pivot point of the connecting rods (411, 412, 420) connected to the main tube being adapted to perform the translational movement together with the main tube (10), and a second end of each connecting rod (411, 412, 429) being pivotally connected to a wheel tube (311, 312, 320).

3. The transport cart according to any of claims 1 or 2, the wheel tubes (311, 312, 320) and the main tube (10) being substantially parallel to each other when the transport cart (1) takes a folded position.

4. The transport cart according to any of claims 1 to 3, the transport cart (1) being adapted to
- move from its extended position to its folded position when the main tube (10) translates away from the front wheels (611, 612) along the central axis (100), and
- from its folded position to its extended position when the main tube translates towards the front wheels (611, 612) along the central axis (100).

5. The transport cart according to any of claims 1 to 4, the opening of the transport cart (1) from its folded position to its extended position being carried out by a single manoeuvre of moving two of the three wheel tubes (311, 312, 320) apart.

6. The transport cart according to any of claims 1 to 5, the closing of the transport cart (1) from its extended position to its folded position being carried out by a single manoeuvre of sliding the main tube (10) in the cage (20) along the central axis (100) away from the front wheels (611, 612).

7. The transport cart according to claim 2, and optionally also according to any of the 3 to 6, comprising a first attachment member (501) which retains one end of the two front connecting rods (411, 412) integrally with the main tube (10), and a second attachment member (502), which retains one end of the rear connecting rod (420) integrally with the main tube (10).

8. The transport cart of claim 7, wherein the distance between said first attachment member (501) and said second attachment member (502) is at least 10%, preferably at least 25%, of the length of the central cage (20).

9. The transport cart according to any one of claims 1 to 9, wherein the angle of inclination, defined between the central axis (100) and the central axis of symmetry (201) of the isosceles triangle (200) formed between the centres (C) of the three wheels (611, 612, 620), is between 35 degrees and 70 degrees, preferably between 45 degrees and 55 degrees, ideally 50 ± 1 degrees.

10. The transport cart according to any of claims 1 to 9, wherein the transport cart (1) is arranged so that the extension of the mass vector (410) of the loaded transport cart (1) intersects the central axis of symmetry (201) of the isosceles triangle (200) formed between the centres (C) of the three wheels (611, 612, 620).

11. The transport cart according to any of claims 1 to 10, wherein the front wheels (611, 612) are offset from the corresponding wheel tube (311, 312) towards the front.

12. The transport cart according to any of claims 1 to 11, wherein each front wheel (611, 612) has an inclined orientation relative to the corresponding wheel tube (311, 312), the orientation of each front wheel (611, 612) preferably being parallel to the central axis (100).

13. The transport cart according to any one of claims 1 to 12, wherein the rear wheel (620) is held by a wheel support (621) which is pivotable relative to the rear wheel tube (320), said wheel support (621) being connected by a pivot connection (622) in a rearwardly offset manner to the rear wheel tube (320).

14. The transport cart according to claim 13, wherein the main direction of the rear wheel support (621) is not parallel to the rear wheel tube (320).

15. The transport cart according to any one of claims 1 to 14, comprising a gripping element (70), which comprises a tube (71) and optionally a handlebar (72), which extends rearwardly parallel to the central axis (100) and which is at least partly inserted in the cage (20), the gripping element (70) being adapted to manually enable the manoeuvring of the transport cart (1) forwards or backwards.

16. The transport cart according to any of claims 1 to 15, wherein the transport cart (1) is powered by a battery powered traction system driving the two front wheels (611, 612).
